# EUROPEAN PATENT SPECIFICATION

(11) **EP 3 584 090 B1**
(45) Date of publication and mention of the grant of the patent: **07.07.2021**
(21) Application number: 18753901.0
(22) Date of filing: 07.02.2018
(51) Int. Cl.: B42D 25/30, B42D 25/342

(54) **ANTI-COUNTERFEITING COMPONENT AND OPTICAL ANTI-COUNTERFEITING PRODUCT**
FÄLSCHUNGSSICHERE KOMPONENTE UND FÄLSCHUNGSSICHERES OPTISCHES PRODUKT
COMPOSANT ANTICONTREFAÇON OPTIQUE ET PRODUIT ANTICONTREFAÇON OPTIQUE

(30) Priority: 20.02.2017 CN 201710089613
(43) Date of publication of application: 25.12.2019
(73) Proprietor: Zhongchao Special Security Technology Co., Ltd, Beijing 100070 (CN); China Banknote Printing and Minting Corp., Beijing 100044 (CN)
(72) Inventor: ZHANG, Baoli, Beijing 100070 (CN); SUN, Kai, Beijing 100070 (CN); ZHU, Jun, Beijing 100070 (CN); WANG, Xiaoli, Beijing 100070 (CN)
(74) Representative: Ström & Gulliksson AB
(86) International application number: PCT/CN2018/075506
(87) International publication number: WO 2018/149335

(56) References cited:
- WO-A1-2011/107782
- CN-A- 101 434 176
- CN-A- 101 767 511
- CN-A- 103 625 154
- CN-A- 104 656 167
- US-A- 5 712 731
- US-A1- 2014 063 611

## Description

### BACKGROUND OF THE INVENTION

### Technical Field

The invention relates to the field of optical anti-counterfeiting, in particular to an anti-counterfeiting element and an optical anti-counterfeiting product.

### Description of Related Art

In order to prevent counterfeiting by means of scanning and copying, optical anti-counterfeiting technology has been widely used in various high-security or high-value-added printed materials, such as bank notes, identification cards and packing, and has achieved very good results.

Documents or patents including CN1271106, CN1552589, "Properties of moire magnifiers" (Optical Engineering 37 (11) 3007-3014), and "Research on Micro-lens Array Display Technology" (Micronanoelectronic Technology, No. 6, 2003) disclose the same kind of micro-optical elements with a micro-lens array and a micro-graphic array on two surfaces of a substrate respectively, wherein the micro-graphic array is located near a focal plane of the micro-lens array, and a pattern with a certain depth of field or a dynamic effect is reproduced by means of a moire amplification effect of the micro-lens array on the micro-graphic array.

At present, a periodic micro-graphic array is adopted in such public documents, and the formed optical effect is a simple translation feature or switching feature of a specific visual image along a certain dimension with the change of an observation angle. Although the anti-counterfeiting element is easy to design and process, the visual image can often reflect the key graphic features of the periodic micro-graphic array, making it extremely easy for criminals to crack and counterfeit the anti-counterfeiting element, so the anti-counterfeiting element cannot meet the ever-increasing requirements for anti-counterfeiting technology of products such as packing, printed materials, and securities in preventing cracking and counterfeiting.

Therefore, an anti-counterfeiting element having an anti-counterfeiting micro-graphic array with certain complexity and hard to crack will greatly improve the level of difficulty in counterfeiting and easy identification of corresponding optical anti-counterfeiting products, and is also a hot research direction in the industry at present.

Document WO 2011/107782 A1 discloses an anti-counterfeiting element according to the preamble of claim 1.

### BRIEF SUMMARY OF THE INVENTION

The invention provides a novel anti-counterfeiting element which is easy to identify and hard to counterfeit and an optical anti-counterfeiting product, so as to at least solve the technical problems of poor anti-counterfeiting performance and easy cracking caused by the adoption of a periodic micro-graphic array described in the background art.

In order to achieve the above object, the present invention provides for an anti-counterfeiting element according to claim 1.

Optionally, the anti-counterfeiting image cannot be determined based on only part of the plurality of imaging pixel groups and/or the target visual images.

Optionally, the anti-counterfeiting element further comprises a reflective layer formed on a surface of the sampling-synthesis layer, and the target visual images corresponding to the imaging pixel groups can be presented through the light-pervious part of the substrate and the sampling-synthesis layer by the reflection of the reflective layer.

Optionally, a plurality of imaging pixel groups are arranged on the anti-counterfeiting image corresponding to an image display correlation, wherein a plurality of target visual images corresponding to the plurality of imaging pixel groups can be presented through the light-pervious part of the substrate and the sampling-synthesis layer from a plurality of different angles, and the image display correlation is applicable to the plurality of target visual images.

Optionally, the anti-counterfeiting image comprises an anti-counterfeiting pixel array composed of a plurality of pixels, and the plurality of imaging pixel groups are a set of a plurality of specific pixels selected from the anti-counterfeiting pixel array.

Optionally, the image display correlation includes one or more of the following: translation change correlation, stereoscopic change correlation, deformation change correlation, scaling change correlation, rotation change correlation, flicker change correlation, switch change correlation and switchover change correlation.

Optionally, the sampling-synthesis layer with optical characteristics comprises one or more of the following: spherical micro-lenses, cylindrical micro-lenses, spherical micro-mirrors, and cylindrical micro-mirrors.

Optionally, the anti-counterfeiting image further comprises a coded pixel group and/or a macro identification image.

Optionally, the anti-counterfeiting element further comprises a color functional layer with a fluorescent pattern.

Optionally, the substrate comprises one or more of the following: a single-layer PET film, a single-layer PVC film, a transparent composite film, and a colored dielectric film.

Optionally, various types of color information corresponding to the light absorption micro-structures can be presented through the light-pervious part of the substrate and the sampling-synthesis layer.

Optionally, various types of color information corresponding to the light absorption micro-structures can be presented through the light-pervious part of the substrate and the sampling-synthesis layer by the reflection of the reflective layer.

Optionally, the various types of color information are in one-to-one correspondence to color development configuration parameter groups of the anti-counterfeiting element, and each color development configuration parameter group includes one or more of the following: the material and shape of the reflective layer, the arrangement form of the light absorption micro-structures, the depth of the opening, and the width of the opening.

Optionally, the various types of color information include at least two of the following: red, brown, black, and white.

Another aspect of the embodiment of the invention also provides an optical anti-counterfeiting product, which comprises the anti-counterfeiting element described above.

Optionally, the optical anti-counterfeiting product includes one or more of the following: windowing security lines, labels, bank notes, credit cards, securities, passports, packaging boxes and packaging paper.

The micro-array of an anti-counterfeiting image layer in the anti-counterfeiting element provided by the technical scheme is of an aperiodic or asymmetric configuration, so that a micro anti-counterfeiting image unit in which a periodic or symmetric image is easily extracted is avoided, and the risk that the anti-counterfeiting element is cracked is also reduced, in this way, a counterfeiter cannot crack the information of the whole anti-counterfeiting image layer through part of the anti-counterfeiting image layer, and the anti-counterfeiting capability of the optical anti-counterfeiting element and product is enhanced.

Other features and advantages of the embodiment of the present invention will be described in detail in the detailed description section that follows.

### BRIEF DESCRIPTION OF THE SEVERAL VIEWS OF THE DRAWINGS

Fig. 1 is a sectional view of an optical anti-counterfeiting element according to an embodiment of the present invention;
Fig. 2 is a sectional view of an optical anti-counterfeiting element according to yet another embodiment of the present invention;
Fig. 3a and Fig. 3b are schematic diagrams of a visual image and a corresponding anti-counterfeiting image layer respectively used for explaining the physical principle of a sampling-synthesis process of the anti-counterfeiting image layer by a sampling-synthesis layer;
Fig. 4a, Fig. 4b and Fig. 4c are a visual image effect, a sampling-synthesis layer and part of an anti-counterfeiting image layer respectively provided by a typical periodical and micro-array form anti-counterfeiting image layer with an axis of symmetry in the prior art;
Fig. 5a, Fig. 5b and Fig. 5c are a visual image effect, a sampling-synthesis layer and part of an anti-counterfeiting image layer respectively provided by another typical periodical and micro-array form anti-counterfeiting image layer with an axis of symmetry in the prior art;
Fig. 6a, Fig. 6b and Fig. 6c show a visual image effect, a sampling-synthesis layer and part of an anti-counterfeiting image layer respectively in utilizing the optical anti-counterfeiting element according to a first embodiment of the present invention;
Fig. 7a, Fig. 7b and Fig. 7c show a visual image effect, a sampling-synthesis layer and part of an anti-counterfeiting image layer respectively in utilizing the optical anti-counterfeiting element according to a second embodiment of the present invention;
Fig. 8a, Fig. 8b and Fig. 8c show a visual image effect, a sampling-synthesis layer and part of an anti-counterfeiting image layer respectively in utilizing the optical anti-counterfeiting element according to a third embodiment of the present invention;
Fig. 9a, Fig. 9b and Fig. 9c show a visual image effect, a sampling-synthesis layer and part of an anti-counterfeiting image layer respectively in utilizing the optical anti-counterfeiting element according to a fourth embodiment of the present invention;
Fig. 10a, Fig. 10b and Fig. 10c show a visual image effect, a sampling-synthesis layer and part of an anti-counterfeiting image layer respectively in utilizing the optical anti-counterfeiting element according to a fifth embodiment of the present invention;
Fig. 11a, Fig. 11b and Fig. 11c show a visual image effect, a sampling-synthesis layer and part of an anti-counterfeiting image layer respectively in utilizing the optical anti-counterfeiting element according to a sixth embodiment of the present invention;
Fig. 12a, Fig. 12b and Fig. 12c show a visual image effect, a sampling-synthesis layer and part of an anti-counterfeiting image layer respectively in utilizing the optical anti-counterfeiting element according to a seventh embodiment of the present invention;
Fig. 13a, Fig. 13b and Fig. 13c show a visual image effect, a sampling-synthesis layer and part of an anti-counterfeiting image layer respectively in utilizing the optical anti-counterfeiting element according to an eighth embodiment of the present invention;
Fig. 14a, Fig. 14b and Fig. 14c show a visual image effect, a sampling-synthesis layer and part of an anti-counterfeiting image layer respectively in utilizing the optical anti-counterfeiting element according to a ninth embodiment of the present invention;
Fig. 15a, Fig. 15b and Fig. 15c show a visual image effect, a sampling-synthesis layer and part of an anti-counterfeiting image layer respectively in utilizing the optical anti-counterfeiting element according to a tenth embodiment of the present invention;
Fig. 16a, Fig. 16b and Fig. 16c show a visual image effect, a sampling-synthesis layer and part of an anti-counterfeiting image layer respectively in utilizing the optical anti-counterfeiting element according to an eleventh embodiment of the present invention;
Fig. 17a and Fig. 17b show a sectional view and a perspective view of an anti-counterfeiting image of an optical anti-counterfeiting element respectively according to yet another embodiment of the present invention; and
Fig. 18a, Fig. 18b, Fig. 18c and Fig. 18d are partial enlarged views of a light absorption micro-structure of an optical anti-counterfeiting element respectively according to yet another embodiment of the present invention.

### DETAILED DESCRIPTION OF THE INVENTION

An optical anti-counterfeiting element according to the present invention and an optical anti-counterfeiting product using the optical anti-counterfeiting element will be described below in detail with reference to the accompanying drawings. It should be understood that the drawings and detailed description are merely descriptions of preferred embodiments of the present invention and do not limit the scope of the present invention in any way.

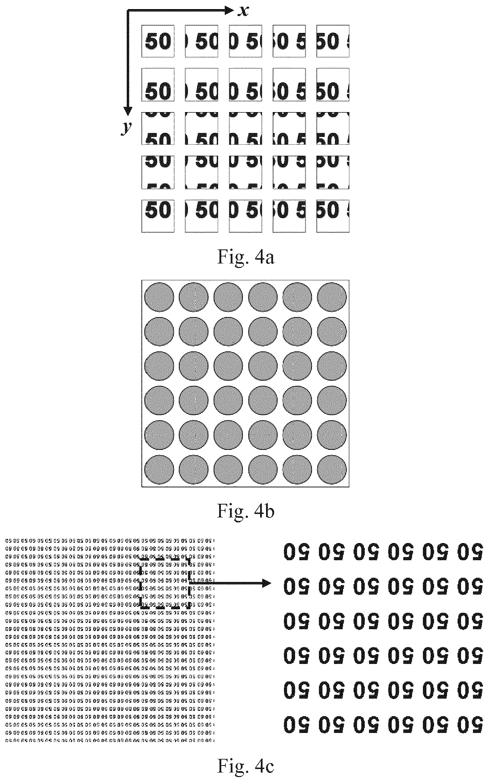

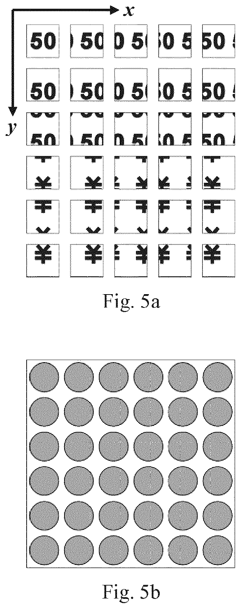

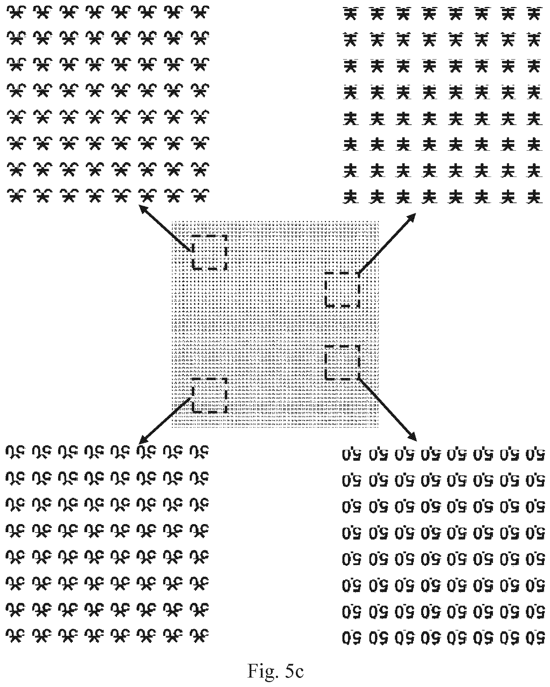

In the following, a micro-array form anti-counterfeiting image layer which is periodic or has an axis of symmetry will be analyzed in combination with typical examples in the prior art shown in Fig. 4a, Fig. 4b and Fig. 4c as well in Fig. 5a, Fig. 5b and Fig. 5c, thus explaining the key problems existing in the prior art.

Fig. 4a shows a visual image effect provided by a periodical and micro-array form anti-counterfeiting image layer with an axis of symmetry, wherein only five rows and five columns of visual images are schematically selected; in the process of changing a viewing angle along a positive direction of an x-axis, the visual images move in parallel along the positive direction of the x-axis, which is a general translation effect capable of forming a floating depth of field sense; and in a y-axis direction, the same positive translation effect of the visual images can also be generated when changing the viewing angle along the positive direction. Fig. 4b shows that the adopted sampling-synthesis layer is a rectangular form spherical micro-lens array, and the array period of the micro-lens array is 25 µm. Fig. 4c shows part of the corresponding anti-counterfeiting image layer, which is obviously periodic and has an axis of symmetry.

Fig. 5a shows a visual image effect provided by another periodical and micro-array form anti-counterfeiting image layer with an axis of symmetry, wherein only six rows and five columns of visual images are schematically selected; in the process of changing a viewing angle along a positive direction of an x-axis, the visual images move in parallel along the positive direction of the x-axis, which is a general translation effect capable of forming a floating depth of field sense; and in a y-axis direction, the same positive translation effect of the visual images can also be generated when changing the viewing angle along the positive direction, and in addition, an effect of switching between two kinds of visual images can be generated while the visual images move in the Y-axis direction. Fig. 5b shows that an adopted sampling-synthesis layer is a rectangular form spherical micro-lens array, and the array period of the micro-lens array is 25 µm. Fig. 5c shows multiple parts of the corresponding anti-counterfeiting image layer, which is obviously periodic and has an axis of symmetry.

The embodiments of Figs. 4 and Figs. 5 show the general translation or switching effect obtained by combined action of two typical anti-counterfeiting image layers which are periodic or have an axis of symmetry and a sampling-synthesis layer in the prior art. The general translation effect includes orthogonal translation, floating translation, and sinking translation, and is usually realized by designing a periodic pattern of the anti-counterfeiting image layer to form a slight periodic difference or angle difference with a focusing element array of the sampling-synthesis layer. In addition, this general translation effect cannot form a continuous depth-of-field change effect of stereoscopic images. The switching effect can further form a multi-channel switching feature based on the embodiment of Figs. 5, but the corresponding anti-counterfeiting image layer is still periodic or has an axis of symmetry. In summary, it is not hard to understand that the anti-counterfeiting element with the anti-counterfeiting image layer which is periodic or has an axis of symmetry has the following disadvantages:
(1) the periodic or symmetrical anti-counterfeiting image layer has micro anti-counterfeiting image units which are easy to extract, and the micro anti-counterfeiting image units are often consistent with visual images, so the micro image units can be obtained directly through the visual images;
(2) the anti-counterfeiting image layer has a simple rule which is easy to decode;
(3) a counterfeiter can crack the information of the whole anti-counterfeiting image layer only need part of the anti-counterfeiting image layer, without traversing all positions of the anti-counterfeiting image layer; and
(4) in actual production and processing, the sampling-synthesis layer and the anti-counterfeiting image layer are processed separately, which means that strict alignment cannot be realized between the two layers and misalignment is inevitable, including position deviation, angle deviation, and deformation deviation; this misalignment not only affects the quality of an observed sampled and synthesized image, but more importantly, when the visual synthesized image provides more than one piece of image information, it cannot guarantee from which of the multiple pieces of image information the sampled and synthesized image seen by an observer at a specified observation angle comes, and in one case, the observer will see the mixed information of multiple images at the same time; and all of the above directly result in that the optical anti-counterfeiting information cannot be identified by users or is not sufficiently identified.

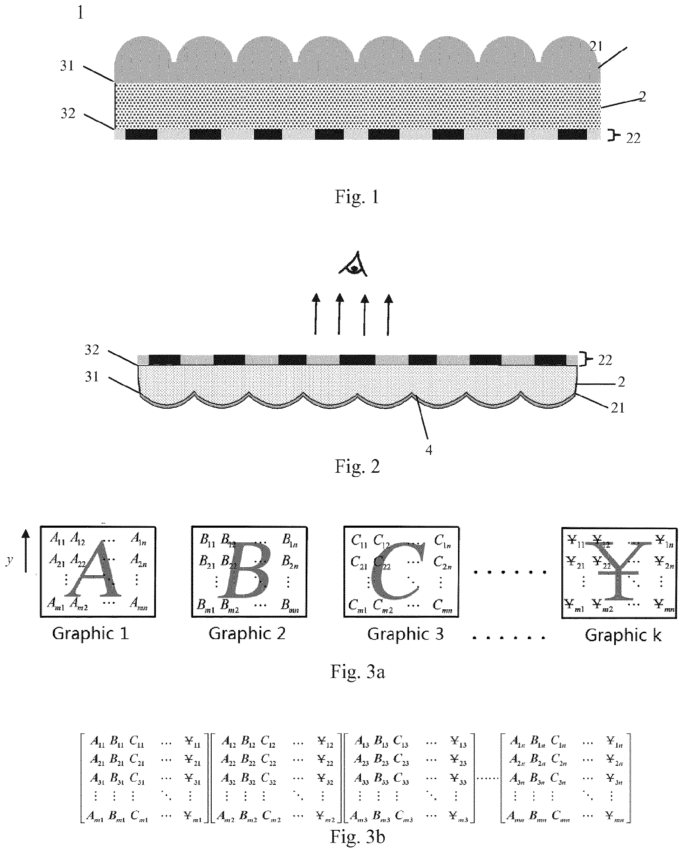

As shown in Fig. 1, an optical anti-counterfeiting element 1 according to an embodiment of the present invention comprises a substrate 2 comprising a first surface 31 and a second surface 32 opposite each other; a sampling-synthesis layer 21 formed on the first surface 31 of the substrate 2; and an anti-counterfeiting image layer 22 formed on the second surface 32 of the substrate 2, wherein the anti-counterfeiting image layer 22 corresponds to the sampling-synthesis layer 21, that is, the sampling-synthesis layer 21 can sample and synthesize the anti-counterfeiting image layer 22 to form one or more visual synthesized images, and the anti-counterfeiting image layer 22 is aperiodic and/or has no axis of symmetry in microscopic arrangement. In this way, an anti-counterfeiting image cannot be determined only based on part of a plurality of imaging pixel groups and/or a target visual image, i.e. part of the anti-counterfeiting image, thus greatly improving the concealment and cracking difficulty of the key anti-counterfeiting image of the anti-counterfeiting element.

It can be understood that the target visual image can be an image which can be customized, such as a logo or trademark, etc; that is, the display of the target visual pattern can be realized through the cooperation of the imaging pixel groups arranged aperiodically and/or without an axis of symmetry and the light-pervious substrate 101 in the embodiment of the present invention, so that an observer can see a specific image. The above-mentioned "aperiodic and/or has no axis of symmetry" refers to the fact that there is no periodic or partially periodic imaging pixel group in a two-dimensional plane where the anti-counterfeiting image 22 is located, and there is no virtual in-plane axis of symmetry which makes the image information of the anti-counterfeiting image layer symmetrical about the axis of symmetry. Further details and applications regarding this embodiment of the invention will continue to be set forth in other embodiments below.

Preferably, the sampling-synthesis layer 21 may be a micro-lens array layer or other micro-sampling tools capable of imaging the anti-counterfeiting image layer 22. The micro-lens array layer may be an aperiodic array, a random array, a periodic array, a partially periodic array or any combination thereof formed by a plurality of micro-lens units, and the micro-lens units may be refractive micro-lenses, diffractive micro-lenses or a combination thereof, wherein the refractive micro-lenses may be spherical micro-lenses, parabolic micro-lenses, ellipsoidal micro-lenses, cylindrical micro-lenses, or micro-lenses in other geometric shapes based on geometric optics or any combination thereof, and the diffractive micro-lenses may be harmonic diffractive micro-lenses, planar diffractive micro-lenses or Fresnel zone plates. Except Fresnel zone plates, continuous curved or stepped lenses can be used as micro-lens units for other micro-lenses. For example, the sampling-synthesis layer 21 in Fig. 1 may be a periodic array composed of a plurality of spherical micro-lens units arranged into a rectangle, honeycomb, diamond, triangle, or the like, or may be a periodic array of cylindrical micro-lenses along a certain direction.

Preferably, the image period of the periodic or partially periodic sampling-synthesis layer 21 and the anti-counterfeiting image layer 22 in the optical anti-counterfeiting element according to the present invention may be 10 µm to 200 µm, preferably 15 µm to 70 µm; the focal length of the sampling-synthesis layer (e.g., micro-lens array layer) 21 may be 10 µm to 200 µm, preferably 15 µm to 40 µm; and the processing depth of the sampling-synthesis layer (e.g., micro-lens array layer) 21 is preferably less than 15 µm, more preferably 0.5 µm to 10 µm. In addition, the difference between the thickness of the substrate 2 and the focal length of the sampling-synthesis layer 21 is preferably less than 3 µm, and more preferably the difference is less than 1 µm.

Preferably, the sampling-synthesis layer 21 can be obtained by micro-nano processing methods such as optical exposure and electron beam exposure, and can also be realized by processes such as hot melt reflow, and mass replication can be performed by processing methods such as ultraviolet casting, mold pressing and nano-imprinting.

Preferably, the anti-counterfeiting image layer 22 can be obtained by offset printing, gravure printing, micro-printing, nano-imprinting, ultraviolet curing material casting, laser exposure, electron beam exposure, etc.

Preferably, the anti-counterfeiting image layer 22 in each of the above structures may further comprise a visual image (not shown) which can be directly observed without being sampled and synthesized by the sampling-synthesis layer 21, thereby forming an image which can be directly observed rather than sampled and synthesized.

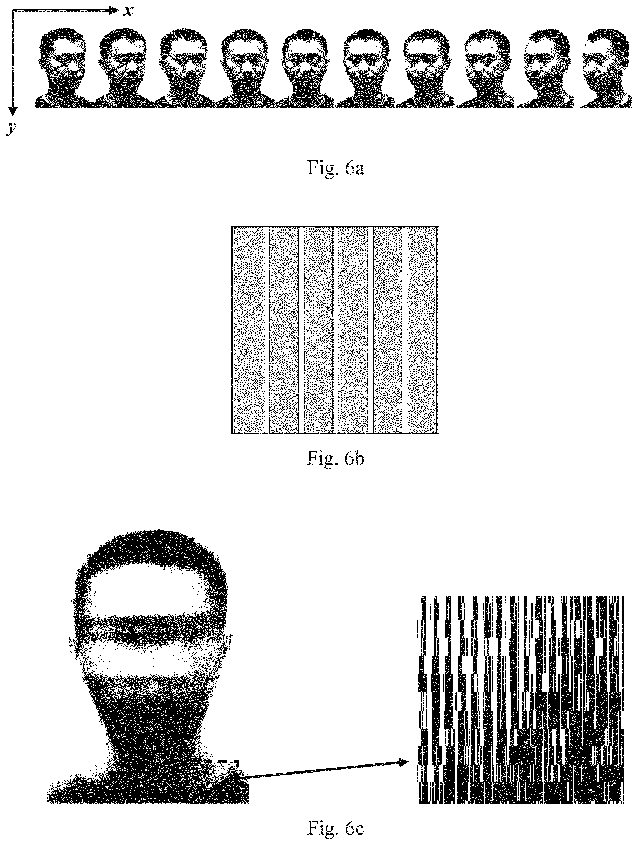

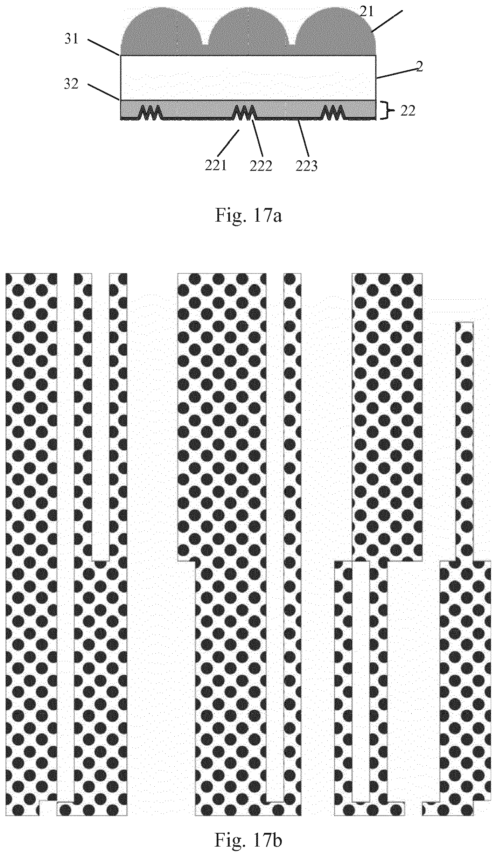

Figs. 17 show an anti-counterfeiting image 22 adopting a selective light absorption micro-structure. Fig. 17a shows a sectional view of the optical anti-counterfeiting element 1 formed by the anti-counterfeiting image 22 adopting the selective light absorption micro-structure 221, wherein 223 is a reflective layer; and Fig. 17b shows a top view of the optical anti-counterfeiting element 1 using the selective light absorption micro-structure 221 as a micro-image shaped anti-counterfeiting image segment when selecting the anti-counterfeiting image of the embodiment corresponding to Fig. 6c. The light absorption micro-structure 221 is used to absorb the color and efficiency of a specific spectrum.

In this embodiment, the selective light absorption micro-structure 221 is composed of a plurality of open structures, i.e., concave micro-structures 222, the width of the concave micro-structures 222, i.e., the opening width is 1 µm, and the opening depth is 0.8 µm. As shown in the figure, a surface of the concave micro-structure 222 is further covered with a 40 nm thick metal A1 layer as a reflective layer.

At this point, whether the anti-counterfeiting image 22 is observed through a microscope or a macro image formed by sampling-synthesis the anti-counterfeiting image 22 by the sampling-synthesis layer 21 is observed, the image shape is black; and the principle is that the concave micro-structures 222 and the reflective layers 223 together provide a light trap with a light absorption function, which can absorb the full spectrum of visible light band to inhibit reflected light, thus making the part of the anti-counterfeiting image 22 covered thereby appear black. The spectral absorption characteristics of the selective light absorption micro-structure 221, including absorption color and efficiency and reflection color and efficiency, can be controlled by selecting the opening depth, opening width and arrangement form of the concave micro-structures 222, thereby determining the color of the image shape of the anti-counterfeiting image 22.

Preferably, the top view shape of the light absorption micro-structure 221 is any geometric shape such as a circle and a polygon, and the cross section thereof may be any curved surface such as a circle, a sine, a rectangle, and a triangle.

The opening width of the light absorption micro-structure is less than 1 µm.

Preferably, the opening width of the light absorption micro-structure is less than 0.5 µm.

The ratio of the opening depth to the opening width of the light absorption micro-structure is greater than 0.3.

Preferably, the ratio of the opening depth to the opening width of the light absorption micro-structure is greater than 0.8.

Preferably, the reflective layer 223 may include any one or a combination of the following various plating layers: a single metal plating layer, multiple metal plating layers, a plating layer formed by sequentially stacking an absorption layer, a low refractive index dielectric layer and a reflective layer, and a plating layer formed by sequentially stacking an absorption layer, a high refractive index dielectric layer and a reflective layer. In accordance with the present invention, the high refractive index dielectric layer refers to a dielectric layer having a refractive index of 1.7 or more, and may be made from ZnS, TiN, TiO₂, TiO, Ti₂O₃, Ti₃O₅, Ta₂O₅, Nb₂O₅, CeO₂, Bi₂O₃, Cr₂O₃, Fe₂O₃, HfO₂, ZnO, etc; and the low refractive index dielectric layer refers to a dielectric layer having a refractive index of less than 1.7, and may be made from MgF₂, SiO₂, etc. The metal plating layer or the reflective layer may be made from metals such as Al, Cu, Ni, Cr, Ag, Fe, Sn, Au, Pt, or mixtures and alloys thereof, and the absorption layer may be made from metals such as Cr, Ni, Cu, Co, Ti, V, W, Sn, Si, Ge, or mixtures and alloys thereof. It should be noted that although the reflective layer 223 itself has specific colors due to the selection of materials and structures, for example, silver white of an Al layer and yellow of Au, the anti-counterfeiting image 22 reflects the color feature formed by the combined action of the selective light absorption micro-structure and the above-mentioned reflective layer, which is different from the color feature of the selected reflective layer, for example, the black color formed in the embodiment of Figs. 17 is completely different from the silvery white color of the Al layer.

In another embodiment, the concave micro-structures 222 of the selective light absorption micro-structure 221 shown in Figs. 17 have an opening width of 330 nm and an opening depth of 180 nm. At this point, whether the anti-counterfeiting image 22 is observed through a microscope or a macro image formed by sampling-synthesis the anti-counterfeiting image 22 by the sampling-synthesis layer 21 is observed, the image shape is brown.

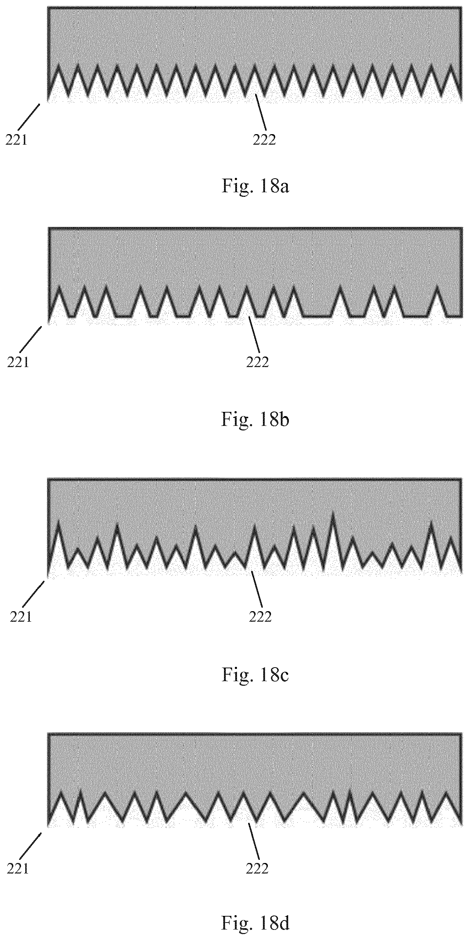

Figs. 18 show different arrangement forms of the concave micro-structures 222 of the selective light absorption micro-structure 221, wherein Fig. 18a employs periodically arranged concave micro-structures 222; Fig. 18b employs randomly arranged concave micro-structures 222; Fig. 18c employs concave micro-structures 222 with a random depth; and Fig. 18d employs concave micro-structures with a random opening width.

The periodically arranged concave micro-structures 222 of Fig. 18a inevitably generate a diffraction effect on incident light, thus including diffracted light on the basis of selective absorption and reflection, and if the diffracted light does not meet the needs of a user, then the randomly arranged concave micro-structures 222 of Fig. 18b can solve this problem, because random arrangement can eliminate the diffraction effect of the periodically arranged concave micro-structures 222, thereby purely providing selective light absorption characteristics.

One of the functions of the concave micro-structures 222 with a random depth in Fig. 18c and the concave micro-structures 222 with a random opening width in Fig. 18d is to control the ratio of selective light absorption and light reflection, thereby controlling the gray scale of the color presented by the anti-counterfeiting image. Of course, a similar purpose can be achieved by controlling the arrangement density of the concave micro-structures 222.

Preferably, an original version of the anti-counterfeiting image 22 with the selective light absorption micro-structures 221 can be obtained by micro-nano processing methods such as optical exposure and electron beam exposure, and mass replication can be performed by processing methods such as ultraviolet casting, mold pressing and nano-imprinting. An area covered by the selective light absorption micro-structure 221 in the above general processing process is definitely determined by the original version and is not affected by a batch processing process. Compared with a common anti-counterfeiting image formed by ink printing, unique advantages are realized, for example, ink strokes completely restore a design size, no expansion is caused, and contrast and definition are higher; moreover, the fineness of the optical micro-structure depends on the opening width of the concave micro-structures 222, which can be micron-sized or even smaller, and resolution is higher compared with the micro image formed by ink printing.

Although the embodiments corresponding to Figs. 17 and Figs. 18 schematically describe that the concave micro-structures 222 of the selective light absorption micro-structure 221 are arranged at the image shape of the anti-counterfeiting image 22, in fact, the concave micro-structures 222 can be arranged at any position such as the background where the strokes of the anti-counterfeiting image are located according to requirements, and what is more, the anti-counterfeiting image can exhibit multiple colors by adjusting the opening width, the opening depth and the arrangement form of the selective light absorption micro-structures, and the type and structure of the reflective layer 223 in different regions.

Referring to Fig. 17b and Figs. 18, three regions, namely a first region to a third region from left to right are described in detail: when aluminum is used as the reflective layer 223, the selective light absorption micro-structures are: red at the first region with an opening depth of 100 nm and an opening width of 300 nm, brown at the second region with an opening depth of 180 nm and an opening width of 345 nm, and black at the third region with an opening depth of 300 nm and an opening width of 250 nm, thereby forming the anti-counterfeiting image with various types of color information. Besides, when the opening depth of the third region is randomly arranged in the range of 50-150 nm and the width is randomly arranged in the range of 500-1000 nm, the corresponding color is white.

The advantage of adopting the anti-counterfeiting image containing the light absorption micro-structures is that the image shape of the anti-counterfeiting image is determined by the size of the coverage area of the light absorption micro-structures, so that the sharpness of the micro-image shape can be guaranteed, and a fine micro-image shape corresponding to the opening width of the light absorption micro-structures can be provided. When the anti-counterfeiting image of the optical anti-counterfeiting element in the embodiment of the invention simultaneously adopts the aperiodic and/or asymmetric micro-array form and the selective light absorption micro-structures, the optical anti-counterfeiting element can simultaneously have novel optical anti-counterfeiting characteristics and clear and fine microscopic and macroscopic images, thereby greatly improving the quality of the optical anti-counterfeiting element and the characteristics of easy identification and difficult counterfeiting.

Preferably, a coded image or a macro identification image is added to the anti-counterfeiting image layer 22, and the coded image or macro identification image need not be sampled and synthesized by the sampling-synthesis layer 21. The coded image may be a macro coded image, a micro hidden image identified by a magnifying glass or a microscope, or an image reproduced by white light or monochromatic incident light. The coded image can be processed with the anti-counterfeiting image layer in one step, and can also be added in another step by adopting the method in the processing range of the anti-counterfeiting image layer, thereby further increasing the difficulty of counterfeiting the anti-counterfeiting element.

Preferably, the optical anti-counterfeiting element 1 according to the present invention may further have one or more diffracted light variation features, interference light variation features, micro-nano structure features, printing features, partial metallization features, and magnetic, optical, electrical, and radioactive features for machine reading formed in the substrate 2, on the first surface 31 and the second surface 32 of the substrate 2, in the sampling-synthesis layer 21, and on the surface of the anti-counterfeiting image layer 22. For example, a fluorescent material (not shown) can be added to the optical anti-counterfeiting element 1 of the present invention, so that the optical anti-counterfeiting element has fluorescent characteristics. The fluorescent material may form a fluorescent pattern by, for example, printing. For example, by replacing a liquid crystal light variable material working as a color functional layer with a fluorescent material, a fluorescent pattern can meet the conditions of sampling and synthesizing, thus forming a sampled and synthesized fluorescent pattern.

In addition, the substrate 2 may be at least partially transparent or may be a colored dielectric layer. In a preferred scheme, the substrate 2 can be a single transparent dielectric film, such as PET film or PVC film. Of course, the substrate can also be a transparent dielectric film with a functional coating (such as imprinting layer) on a surface, or can be a multilayer film formed by compounding.

Preferably, the optical anti-counterfeiting element of the present invention can also adopt a configuration as shown in Fig. 2, and the reflective layer 4 is further added to the surface of the sampling-synthesis layer 21 at the first surface 31 of the substrate 2, so that an observation direction of human eyes is on the side of the second surface 32 of the substrate 2, that is, after the sampling-synthesis layer 21 samples and synthesizes the anti-counterfeiting image layer 22, the imaging content of the sampling-synthesis layer 21 is reflected to human eyes by the reflective layer 4. It can be understood from the figure that the anti-counterfeiting image layer 22 should also be at least partially pervious to light in this embodiment, and the sampling-synthesis layer 21 is a reflective focusing element, such as a spherical micro-mirror or a cylindrical micro-mirror.

The reason why the anti-counterfeiting image layer 22 in Fig. 1 or Fig. 2 adopts a micro-array form which is aperiodic and/or has no axis of symmetry will be described in detail below.

First, the principle of sampling-synthesis the anti-counterfeiting image layer 22 by the sampling-synthesis layer 21 will be explained with reference to Fig. 3a and Fig. 3b: according to the design and forming process of the anti-counterfeiting image layer in Fig. 3a and Fig. 3b, the corresponding sampling-synthesis layer is a cylindrical micro-lens array, and an extending direction of the cylindrical micro-lens (not shown) is the y direction. In Fig. 3a, illustrations 1, 2 ... k correspond to visual images desired to be seen by the observer set at various angles respectively, and the corresponding visual images are indicated by A, B ... 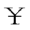 in order. Each visual image is cut in a matrix arrangement way, for example, A is cut into a matrix composed of pixels A11, A12 ... Amn, and other visual images are processed similarly.

Fig. 3b corresponds to Fig. 3a, wherein each matrix unit represents a pixel set below a cylindrical micro-lens; according to this configuration, each cylindrical micro-lens unit is assigned to a part of each preset visual image shown in Fig. 3a; when a cylindrical micro-lens samples pixel units of a certain visual image at a certain observation angle, other cylindrical micro-lenses simultaneously sample other pixel units of the visual image, thereby presenting the content of the visual image to the observer; and when the observation angle changes, the above sampling process will act on other visual images accordingly. Therefore, visual images at different observation angles can be freely set for the cylindrical micro-lens array. The above principle is also valid for other above-mentioned sampling-synthesis layer forms. For example, for the spherical micro-lens array arranged into a rectangle, it can be seen as adding a dimension perpendicular to the cylindrical micro-lens array to further add required visual images, and other sampling-synthesis layer forms can be deduced in the same way.

Although the physical principle described above is currently considered as an understanding and description of the physical phenomenon generated by the optical anti-counterfeiting element according to the present invention, it does not mean that the optical anti-counterfeiting element is limited by the physical principle currently used to explain the phenomenon. The optical anti-counterfeiting element is determined by the basic structure and specific implementation of the optical anti-counterfeiting element.

It should be specially noted that the above physical principle is also an ideal process for the sampling-synthesis layer to sample and synthesize the anti-counterfeiting image layer. In actual processing, the sampling-synthesis layer will inevitably deviate from the anti-counterfeiting image layer, because in actual production and processing, the sampling-synthesis layer and the anti-counterfeiting image layer are processed separately, which means that strict alignment cannot be realized between the two and misalignment will be caused, including position deviation, angle deviation, and deformation deviation. This misalignment not only affects the quality of the observed sampling-synthesis image, but more importantly, when the presented visual synthesized image provides more than one piece of image information, the following defects may exist:

Firstly, it is impossible to determine from which of the multiple pieces of image information the sampled and synthesized image seen by the observer at a specified observation angle comes, for example, the visual image information such as A, B, ... 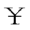 in Fig. 3a cannot specify the angle presented to the observer after being sampled and synthesized, that is, the user cannot know exactly the visual image which can be seen at the current angle; and

Secondly, the observer will see the mixed information of multiple images at the same time, for example, A, B, ... 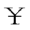 in Fig. 3a will simultaneously present a visual image formed by the mixing of two or more visual images or a distorted low-quality visual image at a specified angle due to the misalignment.

All of the above directly result in that the optical anti-counterfeiting information cannot be identified by users or is not sufficiently identified, so the number of visual images presented by the anti-counterfeiting element should not be too large. However, the visual images presented by the anti-counterfeiting image which is periodic and/or has an axis of symmetry generally have an effect of repeated display, which affects the appreciation experience of the images presented by the anti-counterfeiting element to a certain extent.

In the following, the manufacturing method, structural characteristics and advantages of the micro-array form anti-counterfeiting image layer which is aperiodic and/or has no axis of symmetry will be described in detail with reference to the examples of Figs. 6-16.

Compared with the above-mentioned anti-counterfeiting element with the anti-counterfeiting image layer arranged periodically or with an axis of symmetry, the anti-counterfeiting element with the anti-counterfeiting image layer arranged aperiodically and/or without an axis of symmetry in the embodiments of the present invention provided in conjunction with Figs. 6-16 has the following advantages:
(1) micro anti-counterfeiting image units cannot be extracted from the anti-counterfeiting image layer which serves as a whole, and micro image units cannot be directly obtained through visual images;
(2) the anti-counterfeiting image layer is not easy to crack and has no fixed rule;
(3) there is no repetitive region in the anti-counterfeiting image layer, so a counterfeiter must traverse all positions of each micro-image to completely and accurately restore each part so as to obtain the same visual image features;
(4) the configuration that the micro-array is aperiodic or asymmetric can further bring richer optical anti-counterfeiting features, such as stereoscopic, deformation, scaling, rotation, switching, flickering, special movement, animation and switchover effects, a combination of the above effects, and a combination of the above effects and the general translation effect of the visual images, thus improving the relatively single general translation or switchover effect disclosed in existing products or documents; therefore, the optical anti-counterfeiting element and the optical anti-counterfeiting product according to the invention can realize richer optical anti-counterfeiting characteristics, thereby generating stronger public attraction and higher anti-counterfeiting capability; and
(5) the optical anti-counterfeiting element of the present invention can be produced in batch by using common equipment in this field.

A preferred embodiment of the present invention is to provide an optical anti-counterfeiting element which forms only one visual synthesized image, which has unique advantages. When the visual synthesized image provides only one piece of macroscopic sampled and synthesized image information, such as a combined effect of one or more of stereoscopic, deformation, scaling, rotation, and special movement effects of a visual image, the misalignment only affects a starting point of the one visual image in the optical effect process and does not affect the identification of the visual image by the user. Therefore, the optical anti-counterfeiting element can further avoid identification troubles in addition to all the advantages mentioned above, is more beneficial to the consistency of product information, has stronger anti-counterfeiting capabilities and is more suitable for mass production.

As further implementation and optimization of the embodiment of the present invention, the anti-counterfeiting image 102 comprises a pixel array with a certain number of pixels, and the plurality of imaging pixel groups may be different specific sets of a plurality of specific pixels selected from the pixel array. It can be understood that the specific combination of the selected pixels is determined based on a desired image display effect (such as stereoscopic, deformation, scaling, rotation, special movement effects) and a corresponding observation angle, i.e., the specific pixel set in the anti-counterfeiting image is determined according to the image display effect and the angle at which a specific image is to be displayed, and each specific pixel set is pre-arranged on the anti-counterfeiting image in a preparation stage of the anti-counterfeiting image.

To further support the technical effect of the above-mentioned technical scheme of the present invention, Figs. 6 illustratively show the anti-counterfeiting image layer of the optical anti-counterfeiting element according to a first embodiment of the present invention, and the micro-array of the anti-counterfeiting image layer is aperiodic and has no axis of symmetry. Fig. 6a only schematically shows a provided visual image effect, i.e., information of several angles of a stereoscopic image. In the process of changing the observation angle along the positive direction of the x axis, the visual image will restore a stereoscopic portrait.

This is a stereoscopic effect which can form a continuous depth-of-field change visual sense. The stereoscopic effect is usually identified by the parallax of both eyes of the observer, but even in the case of monocular observation, the stereoscopic image can still be identified based on the experience and common sense of the observer. In the process of observation angle change, although the visual image gradually changes due to the requirement for the stereoscopic effect, the observer can identify the information of the visual image at any angle without causing any difference or trouble in information identification.

Fig. 6b shows that a cylindrical micro-lens array is used as the sampling-synthesis layer, the extending direction of the cylindrical micro-lens is the y direction, and the array period is 25 µm. Fig. 6c shows a part of the corresponding anti-counterfeiting image layer. Considering the complexity of the micro-array of the whole anti-counterfeiting image layer, only a part is shown here, but obviously the anti-counterfeiting image layer is aperiodic and has no axis of symmetry.

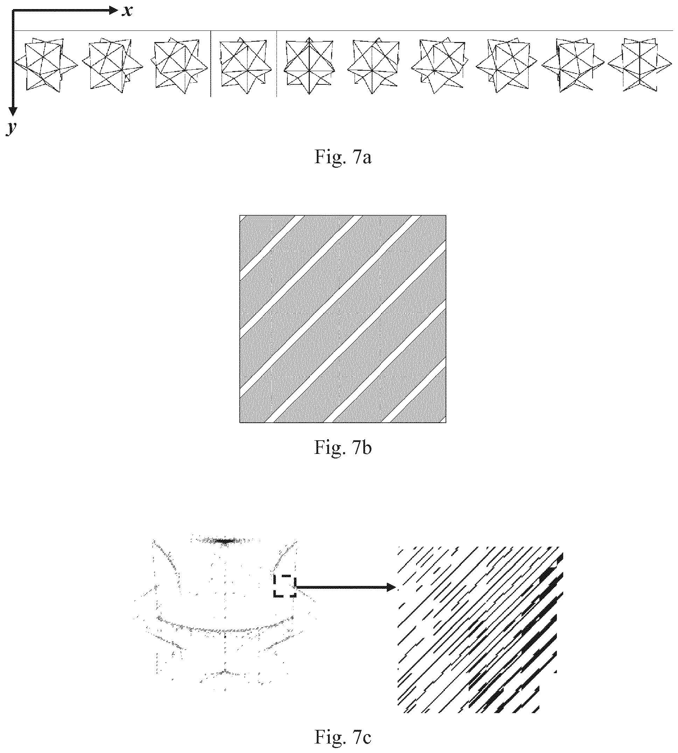

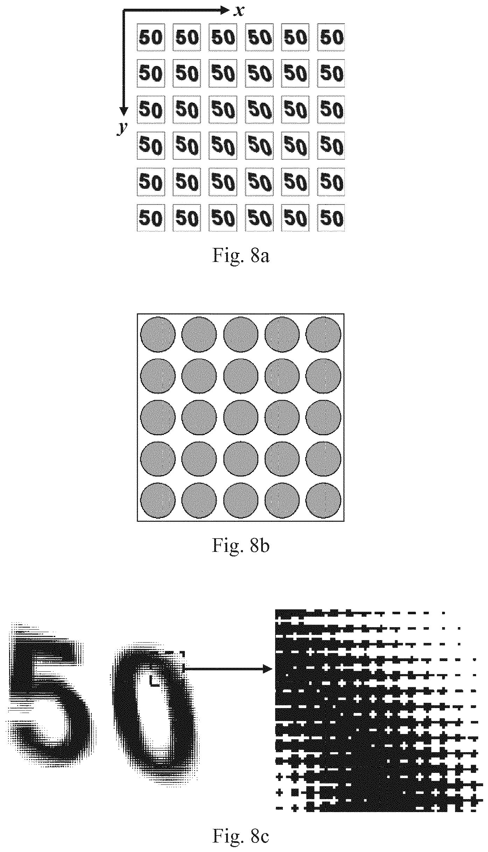

Figs. 7 show the anti-counterfeiting image layer of the optical anti-counterfeiting element according to a second embodiment of the present invention, and the micro-array of the anti-counterfeiting image layer is aperiodic and has no axis of symmetry. Fig. 8a only schematically shows a provided visual image effect, i.e., information of several angles of a stereoscopic image. When the observation angle is changed along the positive direction of the x-axis or y-axis, the visual image will restore an Escher's solid. This is also a stereoscopic effect which can form a continuous depth-of-field change visual sense.

Fig. 7b shows that a cylindrical micro-lens array is used as the sampling-synthesis layer, the extending direction of the cylindrical micro-lens is at an angle of 45 degrees with the x-axis direction, and the array period is 30 µm. Fig. 7c shows a part of the corresponding anti-counterfeiting image layer.

Figs. 8 show the anti-counterfeiting image layer of the optical anti-counterfeiting element according to a third embodiment of the present invention, and the micro-array of the anti-counterfeiting image layer is aperiodic and has no axis of symmetry. Fig. 8a only schematically shows a provided visual image effect, i.e., a deformation process of a visual image. When the observation angle is changed along the positive direction of the x-axis or y-axis, the text font in the visual image is distorted from a normal font to italics.

In the process of observation angle change, although the visual image changes due to the requirement for the deformation effect, the same visual image information can be restored at any angle, so that the observer can identify the visual image information and no trouble is caused in information identification.

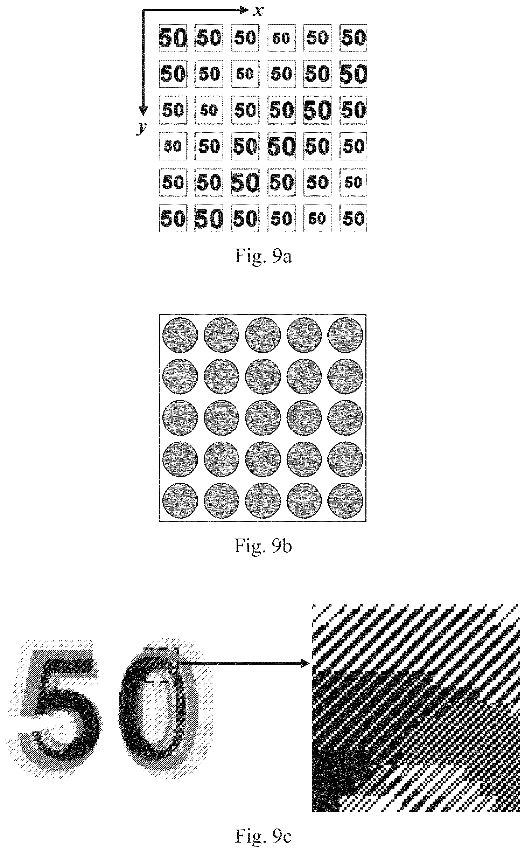

Fig. 8b shows a spherical micro-lens array with sampling-synthesis layers arranged into a rectangle, and the array period thereof is 30 µm. Fig. 9c shows a part of the corresponding anti-counterfeiting image layer.

Figs. 9 show the anti-counterfeiting image layer of the optical anti-counterfeiting element according to a fourth embodiment of the present invention, and the micro-array of the anti-counterfeiting image layer is aperiodic and has no axis of symmetry. Fig. 9a only schematically shows a provided visual image effect, i.e., a process of enlarging and reducing a visual image. In the process of changing the observation angle along the positive direction of the x axis or y axis, the process of reducing or enlarging the visual image will be restored.

In the process of observation angle change, although the visual image changes due to the requirement for the scaling effect, the visual image only changes in size at any angle, so that the observer can identify the information of the visual image, and no trouble would be caused in information identification.

Fig. 9b shows that the adopted sampling-synthesis layer is a spherical micro-lens array, and the array period thereof is 30 µm. Fig. 9c shows a part of the corresponding anti-counterfeiting image layer.

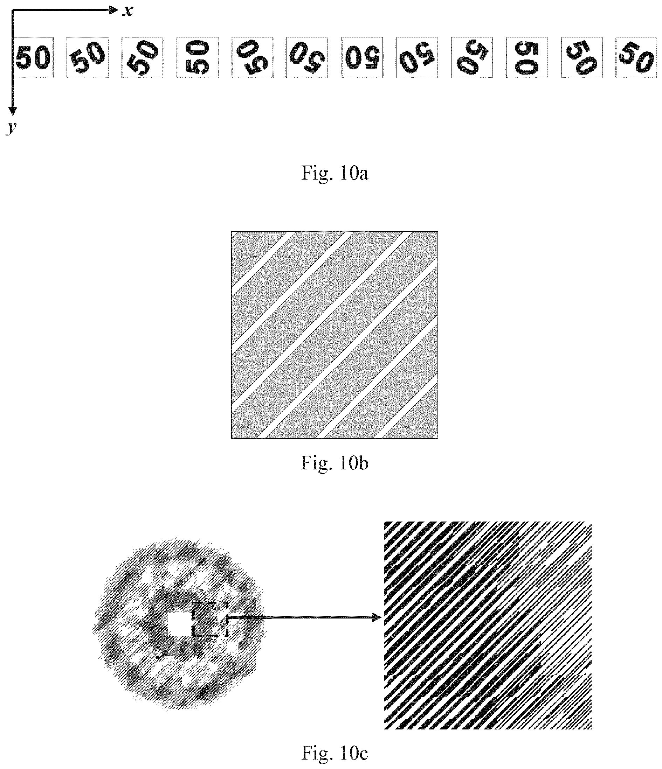

Figs. 10 show the anti-counterfeiting image layer of the optical anti-counterfeiting element according to a fifth embodiment of the present invention, and the micro-array of the anti-counterfeiting image layer is aperiodic and has no axis of symmetry. Fig. 10a only schematically shows a provided visual image effect, i.e., a rotation process of a visual image, that is, in the process of changing the observation angle along the positive direction of the x axis or y axis, the visual image will restore the cyclic rotation process of a visual image.

In the process of observation angle change, although the visual image changes due to the requirement for the rotation effect, the visual image only has angle change after rotation at any angle, and the information expressed by the visual image, such as the number itself, does not change, thus enabling the observer to identify the information of the visual image without causing trouble in information identification.

Fig. 10b shows that a cylindrical micro-lens array is used as the sampling-synthesis layer, the extending direction of the cylindrical micro-lens is at an angle of 45 degrees with the x-axis direction, and the array period is 30 µm. Fig. 10c shows a part of the corresponding anti-counterfeiting image layer.

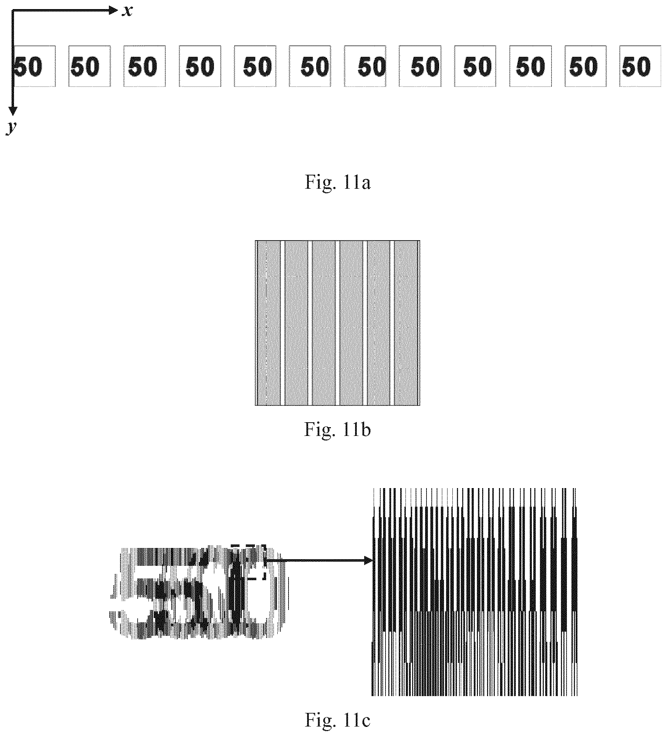

Figs. 11 show the anti-counterfeiting image layer of the optical anti-counterfeiting element according to a sixth embodiment of the present invention, and the micro-array of the anti-counterfeiting image layer is aperiodic and has no axis of symmetry. Fig. 11a only schematically shows a provided visual image effect, i.e., a reciprocating movement process of a visual image, that is, in the process of changing the observation angle along the positive direction of the x axis, a process where the visual image moves in the positive direction of the x axis and then moves in the negative direction of the x axis will be restored.

In the process of observation angle change, although the position of the visual image changes due to the requirement for the special reciprocating movement effect, the information expressed by the visual image, such as the number itself, does not change at any angle, thus enabling the observer to identify the information of the visual image without causing trouble in information identification.

The special movement effect may also be movement along a circumferential track, a wave track, a rectangular track and the like, which is different from the general translation effect of unidirectional linear movement, i.e., the special movement effect is a movement effect other than the general translation effect.

Fig. 11b shows that a cylindrical micro-lens array is used as the sampling-synthesis layer, the extending direction of the cylindrical micro-lens is the y direction, and the array period is 25 µm. Fig. 11c shows a part of the corresponding anti-counterfeiting image layer.

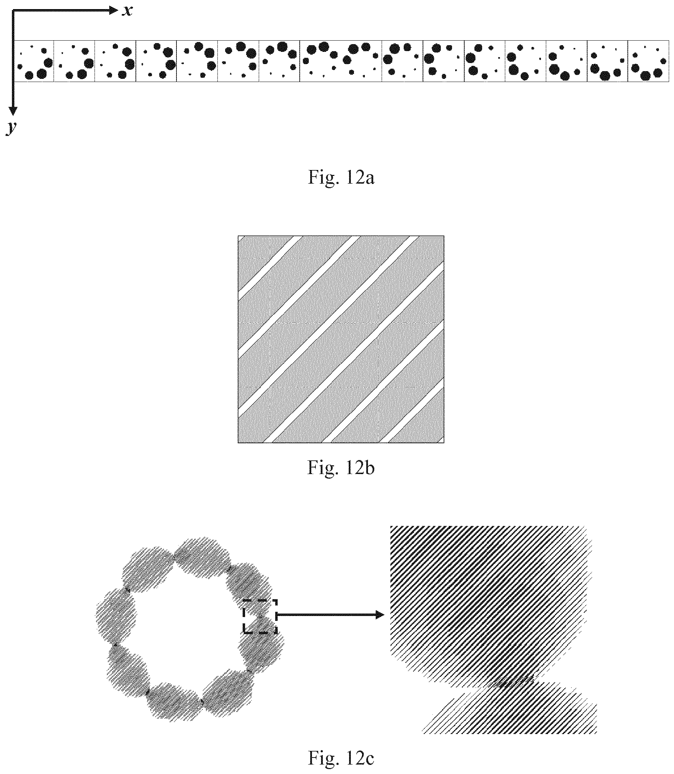

Figs. 12 show the anti-counterfeiting image layer of the optical anti-counterfeiting element according to a seventh embodiment of the present invention, and the micro-array of the anti-counterfeiting image layer is aperiodic and has no axis of symmetry. Fig. 12a only schematically shows a provided visual image effect, and the visual image effect includes two aspects: a circumferential track movement effect of the visual image and a scaling effect of the visual image. In the process of changing the observation angle along the positive direction of the x axis or y axis, clockwise movement of the visual image along a circumferential track will be restored, and the effect of reducing or enlarging will be simultaneously produced.

In the process of observation angle change, although the position of the visual image changes due to the requirement for the special movement effect along a circumferential track and the size of the visual image also changes due to the requirement for the scaling effect, the information expressed by the visual image, such as the circle itself, does not change at any angle, thus enabling the observer to identify the information of the visual image without causing trouble in information identification.

Fig. 12b shows that a cylindrical micro-lens array is used as the sampling-synthesis layer, the extending direction of the cylindrical micro-lens is at an angle of 45 degrees with the x-axis direction, and the array period is 30 µm. Fig. 12c shows a part of the corresponding anti-counterfeiting image layer.

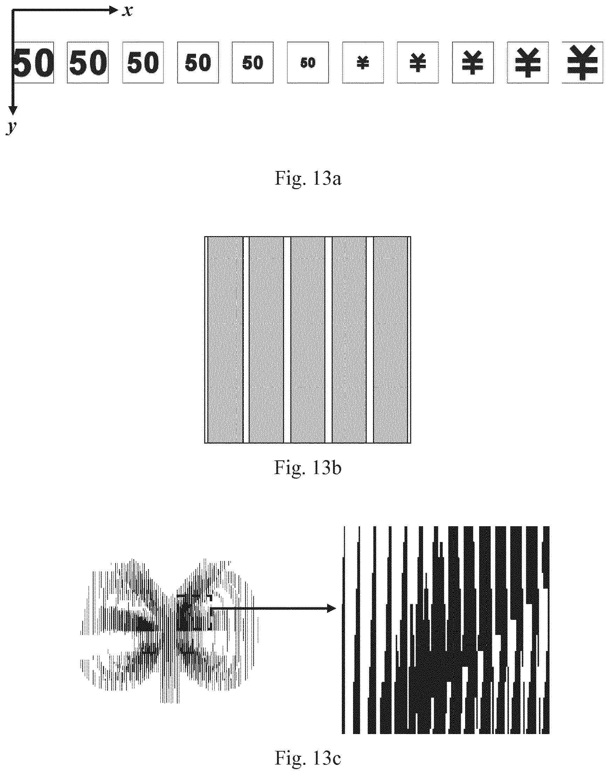

Figs. 13 show the anti-counterfeiting image layer of the optical anti-counterfeiting element according to an eighth embodiment of the present invention, and the micro-array of the anti-counterfeiting image layer is aperiodic and has no axis of symmetry. Fig. 13a only schematically shows a provided visual image effect, and the visual image effect includes two aspects: a scaling effect and a switchover effect of the visual image. In the process of changing the observation angle along the positive direction of the x axis, the process of reducing or enlarging the visual image will be restored, and switchover between two visual images occurs at the same time.

Fig. 13b shows that a cylindrical micro-lens array is used as the sampling-synthesis layer, the extending direction of the cylindrical micro-lens is the y direction, and the array period is 30 µm. Fig. 13c shows a part of the corresponding anti-counterfeiting image layer.

Although the micro-array of the anti-counterfeiting image layer in the embodiment shown in Figs. 13 is aperiodic and has no axis of symmetry, because the corresponding effect includes switchover between two visual images, i.e., two pieces of visual image information can be identified at different angles, and because of the misalignment between the anti-counterfeiting image layer and the sampling-synthesis layer in actual processing,
(1) the angle at which any one of the visual images appears cannot be defined exactly; and
(2) a meaningless visual image may even be formed after distortion and mixing of two visual images, making the observer unable to obtain all visual image information or even any visual image information.

Therefore, as a preferred embodiment, the optical anti-counterfeiting element of the present invention contains information of only one visual image.

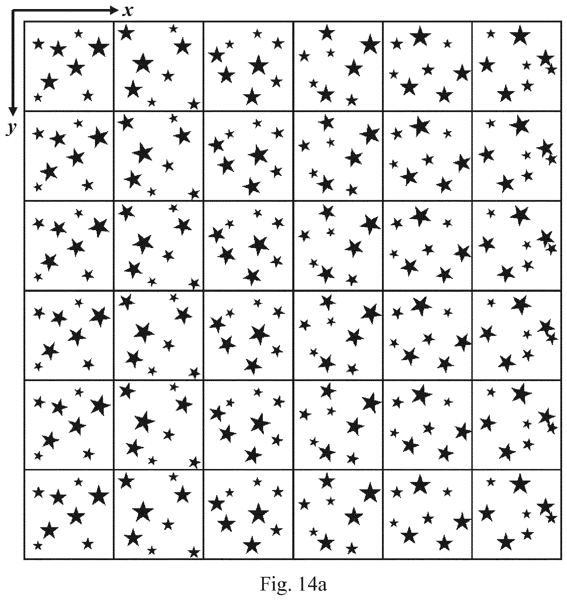

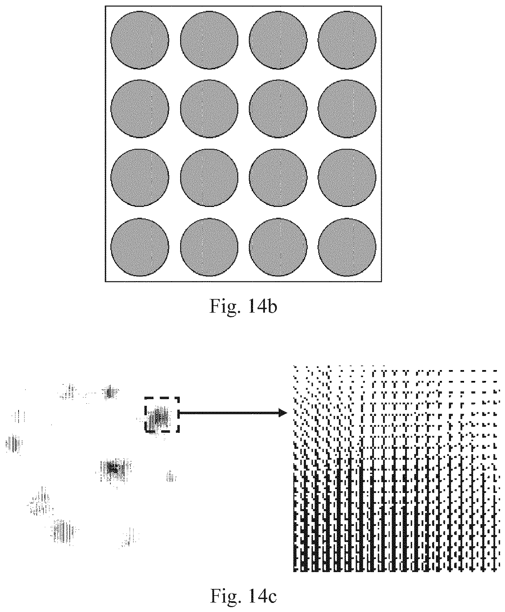

Figs. 14 show the anti-counterfeiting image layer of the optical anti-counterfeiting element according to a ninth embodiment of the present invention, and the micro-array of the anti-counterfeiting image layer is aperiodic and has no axis of symmetry. Fig. 14a only schematically shows a provided visual image effect, and the visual image effect includes two aspects: a flickering effect and a rotation effect of the visual image. In the process of changing the observation angle along the positive direction of the x axis, the change of the position of the visual image will be restored, and the change of the position is, for example, random or pseudo-random in a plane. In the process of changing the observation angle along the positive direction of the y axis, a counterclockwise rotation process of the visual image will be restored.

Fig. 14b shows that the adopted sampling-synthesis layer is a spherical micro-lens array, and the array period thereof is 40 µm. Fig. 14c shows a part of the corresponding anti-counterfeiting image layer.

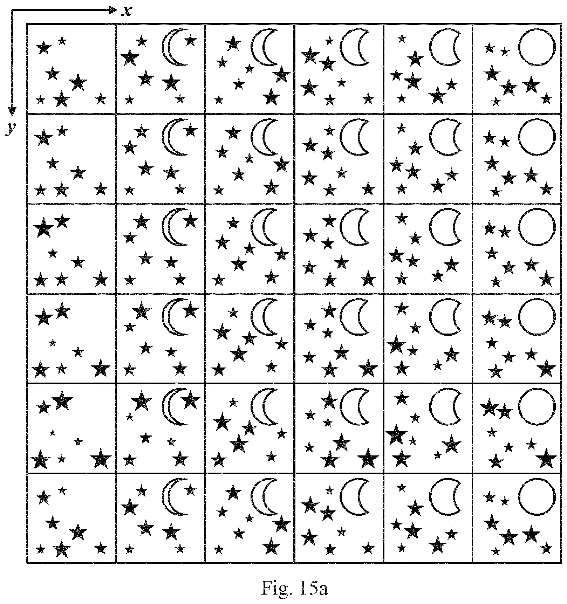

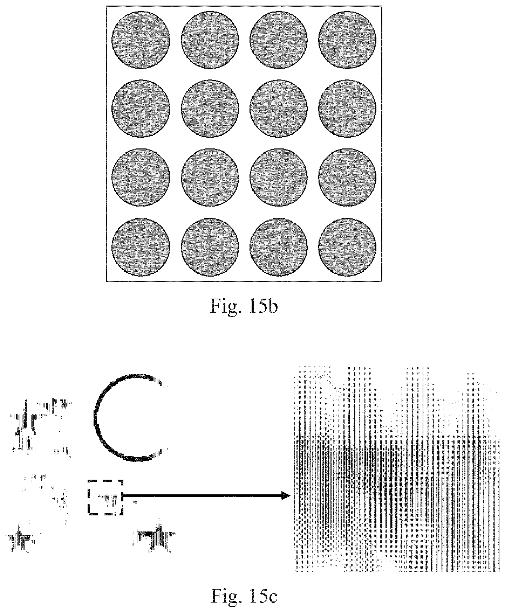

Figs. 15 show the anti-counterfeiting image layer of the optical anti-counterfeiting element according to a tenth embodiment of the present invention, and the micro-array of the anti-counterfeiting image layer is aperiodic and has no axis of symmetry. Fig. 15a only schematically shows a provided visual image effect, and the visual image effect includes four aspects:
(1) a flickering effect of the visual image;
(2) a scaling effect of the visual image;
(3) a switching effect of the visual image; and
(4) an animation effect of the visual image.

In the process of changing the observation angle along the positive direction of the x axis, the change process of the position of a pentagram pattern (flickering effect), the disappearance and appearance process of a moon pattern (switching effect) and the change process of the moon pattern from a crescent to a full moon (animation effect) will be restored. In the process of changing the observation angle along the positive direction of the y axis, the process of reducing or enlarging the pentagram pattern in the image (scaling effect) will be restored.

Fig. 15b shows that the adopted sampling-synthesis layer is a spherical micro-lens array, and the array period thereof is 40 µm. Fig. 15c shows a part of the corresponding anti-counterfeiting image layer.

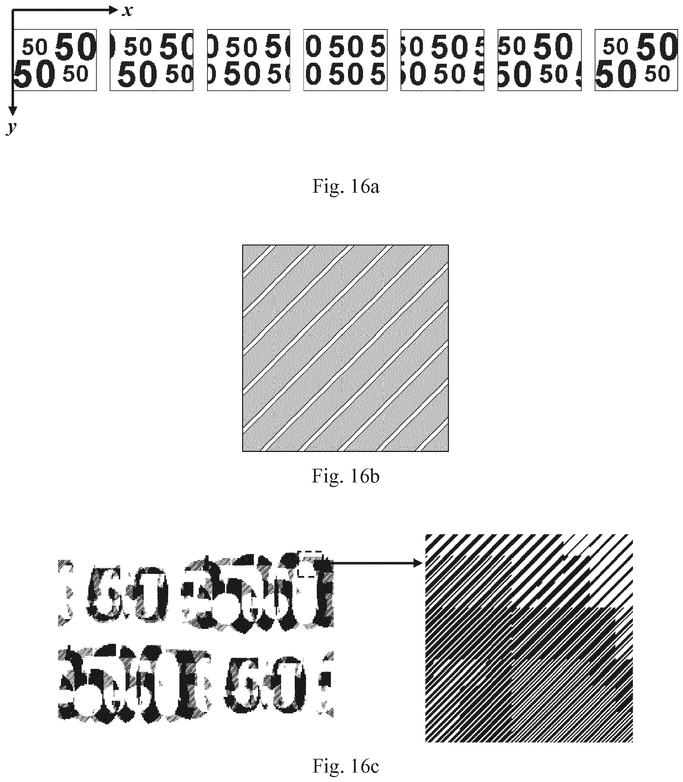

Figs. 16 show the anti-counterfeiting image layer of the optical anti-counterfeiting element according to an eleventh embodiment of the present invention, and the micro-array of the anti-counterfeiting image layer is aperiodic and has no axis of symmetry. Fig. 16a only schematically shows a provided visual image effect, and the visual image effect includes two aspects: a scaling effect and a general translation effect of the visual image. In the process of changing the observation angle along the positive direction of the x axis or y axis, the process of reducing or enlarging the visual image, as well as the general translation effect of the visual image along the positive direction of the x axis will be restored.

Fig. 16b shows that a cylindrical micro-lens array is used as the sampling-synthesis layer, the extending direction of the cylindrical micro-lens is at an angle of 45 degrees with the x-axis direction, and the array period is 20 µm. Fig. 16c shows a part of the corresponding anti-counterfeiting image layer.

In contrast, Figs. 4 and Figs. 5 show the embodiments of the optical effect corresponding to the periodically arranged anti-counterfeiting image layer, and in particular, reference can be made to the visual image effect determined by the relationship between the periodic anti-counterfeiting image layer and the micro-lens array serving as the sampling-synthesis layer in "Research on Micro-lens Array Display Technology" (Micronanoelectronic Technology, No. 6, 2003, p.29). Broadly speaking, the visual image effect generated after the periodic anti-counterfeiting image layer is sampled and synthesized by the sampling-synthesis layer is the general translation effect of the visual image in at least one dimension on a two-dimensional plane in which the visual image is located. The periodic anti-counterfeiting image layer corresponding to the visual image effect is easier to design and process, but is also easier to crack and counterfeit. The extending direction of the cylindrical micro-lens array involved in the embodiments corresponding to Figs. 6 to Figs. 16 can be arbitrary according to the application requirements, and the arrangement form of the spherical micro-lens array can also adopt any of the other ways mentioned above, such as honeycomb array, quadrilateral array, and triangular array. Besides, implementation can all be changed to the configuration shown in Fig. 2, i.e., the micro-lenses can be changed to micro-mirrors correspondingly.

The embodiments corresponding to Figs. 6 to Figs. 16 schematically show the rich optical anti-counterfeiting features brought by the configuration of the anti-counterfeiting image layer with an aperiodic or asymmetric micro-array, such as stereoscopic, deformation, scaling, rotation, special movement, flickering, switching and switchover effects, a combination of the above effects, and a combination of the above effects and the general translation effect of the visual images, thus improving the relatively single general translation or switchover effect disclosed in existing products or documents, providing a richer visual experience for users and enhancing the uniqueness and anti-counterfeiting capability of the optical anti-counterfeiting element. The configuration that the micro-array is aperiodic or asymmetric can further bring richer optical anti-counterfeiting features, such as stereoscopic, deformation, scaling, rotation, special movement, flickering, switching and switchover effects, a combination of the above effects, and a combination of the above effects and the general translation effect of the visual images, thus improving the relatively single general translation or switchover effect disclosed in existing products or documents; therefore, the optical anti-counterfeiting element and the optical anti-counterfeiting product according to the invention can realize richer optical anti-counterfeiting characteristics, thereby generating stronger public attraction and higher anti-counterfeiting capability; and

According to the embodiments corresponding to Figs. 6 to Figs. 16, the realization of each effect can be realized based on the regular arrangement of each pixel in the pixel array constituting the anti-counterfeiting image. More specifically, the imaging pixel group may be a set of specific pixels selected from the anti-counterfeiting image, and the set of specific pixels is suitable for presenting a visual image corresponding to the imaging pixel group at a certain observation angle via the substrate and/or the sampling-synthesis layer; optionally, the plurality of imaging pixel groups are suitable for presenting a plurality of different visual images corresponding to the plurality of imaging pixel groups respectively at different observation angles via the substrate and/or the sampling-synthesis layer, thus realizing switchover of the visual image effects shown in Figs. 6 to Figs. 16.

As further optimization, in the embodiments corresponding to Figs. 6, Figs. 7, Figs. 10, Figs. 11, Figs. 12, Figs. 13 and Figs. 16, cylindrical micro-lenses are used as the sampling-synthesis layer, and of course, cylindrical micro-mirrors can also be used. It should be emphasized that the preferred cylindrical micro-lenses or cylindrical micro-mirrors have unique advantages as the sampling-synthesis layer. First of all, because the cylindrical micro-lenses or micro-mirrors are arranged in only one dimension, a closely arranged structure thereof is more compact and sampling points are continuous, so that the sampled and synthesized image has a higher quality and is clearer. Secondly, the arrangement of the cylindrical micro-lenses or micro-mirrors in only one dimension is easier to realize and can be widely applied to mass production.

According to the optical anti-counterfeiting element provided in the embodiments shown in Figs. 6 to Figs. 16, it is known that the anti-counterfeiting image cannot be determined based on only part of the plurality of imaging pixel groups in the anti-counterfeiting image and/or the target visual image. In other words, criminals can crack the anti-counterfeiting image only by traversing all the images of the anti-counterfeiting image, thus greatly improving the concealment and the cracking difficulty of the anti-counterfeiting element provided by the embodiment of the invention.

The optical anti-counterfeiting element according to the present invention is particularly suitable for being made into windowing security lines. The thickness of the security lines is not greater than 50 µm. Anti-counterfeiting paper with the windowing security lines is used for anti-counterfeiting of various high-security products such as bank notes, passports, and securities.

The optical anti-counterfeiting element according to the present invention can also be used as labels, marks, wide strips, transparent windows, films, etc., and can adhere to various articles through various adhesion mechanisms, for example, transferred onto bank notes, credit cards and other high-security products and high-value-added products.

Another aspect of the present invention provides a product with the optical anti-counterfeiting element, and the product includes but is not limited to various high-security products and high-value-added products such as bank notes, credit cards, passports, and securities, as well as various packaging boxes and packaging paper.

The preferred embodiments of the present invention have been described in detail above with reference to the accompanying drawings. However, the present invention is not limited to the specific details in the above embodiments. Within the scope of the technical concept of the present invention, many simple modifications can be made to the technical scheme of the present invention, and these simple modifications all fall within the scope of protection of the present invention.

In addition, it should be noted that various specific technical features described in the above-mentioned specific embodiments can be combined in any suitable way under the condition of no contradiction. In order to avoid unnecessary repetition, various possible combinations will not be separately described in the present invention.

In addition, any combination can be made between various embodiments of the present invention, so long as it falls under the scope of the claims.

## Claims

1. An anti-counterfeiting element (1) **characterized by** comprising:
a substrate (2) which is at least partially pervious to light, comprising a first surface (32) and a second surface (31) opposite each other; and
an anti-counterfeiting image (22) formed on the first surface (32) of the substrate, the anti-counterfeiting image comprising a plurality of imaging pixel groups (A,B,C), and the imaging pixel groups being arranged aperiodically and/or without an axis of symmetry; and
a sampling-synthesis layer (21) with optical characteristics formed on the second surface (31) of the substrate;
wherein target visual images corresponding to the imaging pixel groups can be presented through a light-pervious part of the substrate and the sampling-synthesis layer;
the imaging pixel groups comprise opening-containing light absorption micro-structures (221), **characterised in that** the micro-structures have spectral absorption characteristics;
the opening width of the light absorption micro-structures is less than 1 µm; the ratio of the opening depth to the opening width of the light absorption micro-structures is greater than 0.3.

2. The anti-counterfeiting element according to Claim 1, **characterized in that** the anti-counterfeiting image cannot be determined based on only part of the plurality of imaging pixel groups and/or the target visual images.

3. The anti-counterfeiting element according to Claim 1, **characterized by** further comprising:
a reflective layer formed on a surface of the sampling-synthesis layer,
wherein the target visual images corresponding to the imaging pixel groups can be presented through the light-pervious part of the substrate and the sampling-synthesis layer by the reflection of the reflective layer.

4. The anti-counterfeiting element according to Claim 1, **characterized in that**
the plurality of imaging pixel groups are arranged on the anti-counterfeiting image corresponding to an image display correlation,
wherein a plurality of target visual images corresponding to the plurality of imaging pixel groups can be presented through the light-pervious part of the substrate and the sampling-synthesis layer from a plurality of different angles, and the image display correlation is applicable to the plurality of target visual images.

5. The anti-counterfeiting element according to Claim 1, **characterized in that**
the anti-counterfeiting image comprises an anti-counterfeiting pixel array composed of a plurality of pixels, and the plurality of imaging pixel groups are a set of a plurality of specific pixels selected from the anti-counterfeiting pixel array.

6. The anti-counterfeiting element according to Claim 4, **characterized in that**
the image display correlation includes one or more of the following: translation change correlation, stereoscopic change correlation, deformation change correlation, scaling change correlation, rotation change correlation, flicker change correlation, switch change correlation and switchover change correlation.

7. The anti-counterfeiting element according to Claim 1, **characterized in that** the sampling-synthesis layer with optical characteristics comprises one or more of the following: spherical micro-lenses, cylindrical micro-lenses, spherical micro-mirrors, and cylindrical micro-mirrors.

8. The anti-counterfeiting element according to Claim 1, **characterized in that** the anti-counterfeiting image further comprises a coded image.

9. The anti-counterfeiting element according to Claim 1, **characterized in that** the anti-counterfeiting element further comprises a color functional layer with a fluorescent pattern.

10. The anti-counterfeiting element according to Claim 1, **characterized in that** the substrate comprises one or more of the following: a single-layer PET film, a single-layer PVC film, a transparent composite film, and a colored dielectric film.

11. The anti-counterfeiting element according to Claim 1, **characterized in that** various types of color information corresponding to the light absorption micro-structures can be presented through the light-pervious part of the substrate and the sampling-synthesis layer by the reflection of the reflective layer.

12. The anti-counterfeiting element according to Claim 11, **characterized in that** the various types of color information are in one-to-one correspondence to color development configuration parameter groups of the anti-counterfeiting element, and each color development configuration parameter group includes one or more of the following: the material and shape of the reflective layer, the arrangement form of the light absorption micro-structures, the depth of the opening, and the width of the opening.

13. The anti-counterfeiting element according to Claim 11, **characterized in that** the various types of color information include at least two of the following: red, brown, black, and white.

14. An optical anti-counterfeiting product, **characterized by** comprising the anti-counterfeiting element according to any one of claims 1-13.

15. The optical anti-counterfeiting product according to Claim 14, **characterized in that** the optical anti-counterfeiting product includes one or more of the following: windowing security lines, labels, bank notes, credit cards, securities, passports, packaging boxes and packaging paper.

## Patentansprüche

1. Fälschungssicheres Element (1), **dadurch gekennzeichnet, dass** es aufweist:
ein Substrat (2), das wenigstens teilweise lichtdurchlässig ist und eine erste Oberfläche (32) und eine zweite Oberfläche (31), die einander gegenüberliegen, aufweist; und
ein fälschungssicheres Bild (22), das auf der ersten Oberfläche (32) des Substrats ausgebildet ist, wobei das fälschungssichere Bild eine Vielzahl von Bildpixelgruppen (A, B, C) aufweist und die Bildpixelgruppen aperiodisch und/oder ohne Symmetrieachse angeordnet sind; und
eine Abtastsyntheseschicht (21) mit optischen Eigenschaften, die auf der zweiten Oberfläche (31) des Substrats ausgebildet ist;
wobei
visuelle Zielbilder, die den Bildpixelgruppen entsprechen, durch einen lichtdurchlässigen Teil des Substrats und der Abtastsyntheseschicht präsentiert werden können;
die Bildpixelgruppen Öffnungen enthaltende Lichtabsorptions-Mikrostrukturen (221) aufweisen, **dadurch gekennzeichnet, dass** die Mikrostrukturen Spektralabsorptionseigenschaften haben;
die Öffnungsweite der Lichtabsorptions-Mikrostrukturen weniger als 1 µm beträgt;
das Verhältnis von Öffnungstiefe zu Öffnungsweite der Lichtabsorptions-Mikrostrukturen größer als 0,3 ist.

2. Fälschungssicheres Element nach Anspruch 1, **dadurch gekennzeichnet, dass** das fälschungssichere Bild auf der Grundlage nur eines Teils der Vielzahl von Bildpixelgruppen und/oder der visuellen Zielbilder nicht bestimmt werden kann.

3. Fälschungssicheres Element nach Anspruch 1, **dadurch gekennzeichnet, dass** es des Weiteren aufweist:
eine reflektierende Schicht, die auf einer Oberfläche der Abtastsyntheseschicht ausgebildet ist,
wobei die visuellen Zielbilder, die den Bildpixelgruppen entsprechen, durch den lichtdurchlässigen Teil des Substrats und der Abtastsyntheseschicht durch die Reflexion der reflektierenden Schicht präsentiert werden können.

4. Fälschungssicheres Element nach Anspruch 1, **dadurch gekennzeichnet, dass**
die Vielzahl von Bildpixelgruppen auf dem fälschungssicheren Bild entsprechend einer Bildanzeigekorrelation angeordnet sind,
wobei eine Vielzahl visueller Zielbilder, die der Vielzahl von Bildpixelgruppen entsprechen, durch den lichtdurchlässigen Teil des Substrats und die Abtastsyntheseschicht aus einer Vielzahl unterschiedlicher Winkel präsentiert werden können und die Bildanzeigekorrelation für die Vielzahl visueller Zielbilder anwendbar ist.

5. Fälschungssicheres Element nach Anspruch 1, **dadurch gekennzeichnet, dass**
das fälschungssichere Bild ein fälschungssicheres Pixelarray aufweist, das aus einer Vielzahl von Pixeln zusammengesetzt ist, und die Vielzahl von Bildpixelgruppen ein Satz einer Vielzahl spezifischer Pixel sind, die aus dem fälschungssicheren Pixelarray ausgewählt werden.

6. Fälschungssicheres Element nach Anspruch 4, **dadurch gekennzeichnet, dass**
die Bildanzeigekorrelation eines oder mehrere der folgenden aufweist: Translationsänderungskorrelation, Stereoänderungskorrelation, Deformationsänderungskorrelation, Skalierungsänderungskorrelation, Rotationsänderungskorrelation, Flimmeränderungskorrelation, Schaltänderungskorrelation und Umschaltänderungskorrelation.

7. Fälschungssicheres Element nach Anspruch 1, **dadurch gekennzeichnet, dass** die Abtastsyntheseschicht mit optischen Eigenschaften eines oder mehrere der folgenden aufweist: sphärische Mikrolinsen, zylindrische Mikrolinsen, sphärische Mikrospiegel und zylindrische Mikrospiegel.

8. Fälschungssicheres Element nach Anspruch 1, **dadurch gekennzeichnet, dass** das fälschungssichere Bild des Weiteren ein codiertes Bild aufweist.

9. Fälschungssicheres Element nach Anspruch 1, **dadurch gekennzeichnet, dass** das fälschungssichere Element des Weiteren eine Farbfunktionsschicht mit einem fluoreszierenden Muster aufweist.

10. Fälschungssicheres Element nach Anspruch 1, **dadurch gekennzeichnet, dass** das Substrat eines oder mehrere der folgenden aufweist: eine Einzelschicht-PET-Folie, eine Einzelschicht-PVC-Folie, eine transparente Verbundfolie und eine farbige dielektrische Folie.

11. Fälschungssicheres Element nach Anspruch 1, **dadurch gekennzeichnet, dass** verschiedene Arten von Farbinformationen entsprechend den Lichtabsorptions-Mikrostrukturen durch den lichtdurchlässigen Teil des Substrats und der Abtastsyntheseschicht durch die Reflexion der reflektierenden Schicht präsentiert werden können.

12. Fälschungssicheres Element nach Anspruch 11, **dadurch gekennzeichnet, dass** die verschiedenen Arten von Farbinformationen in Eins-zu-Eins-Entsprechung zu Farbentwicklungskonfigurationsparametergruppen des fälschungssicheren Elements sind, und jede Farbentwicklungskonfigurationsparametergruppe eines oder mehrere der folgenden aufweist: Material und Form der reflektierenden Schicht, Anordnungsform der Lichtabsorptions-Mikrostrukturen, Tiefe der Öffnung und Weite der Öffnung.

13. Fälschungssicheres Element nach Anspruch 11, **dadurch gekennzeichnet, dass** die verschiedenen Arten von Farbinformationen wenigstens zwei der folgenden aufweisen: rot, braun, schwarz und weiß.

14. Fälschungssicheres optisches Erzeugnis, **dadurch gekennzeichnet, dass** es das fälschungssichere Element nach einem der Ansprüche 1 bis 13 aufweist.

15. Fälschungssicheres optisches Erzeugnis nach Anspruch 14, **dadurch gekennzeichnet, dass** das fälschungssichere optische Erzeugnis eines oder mehrere der folgenden aufweist: Fensterungs-Sicherheitslinien, Label, Banknoten, Kreditkarten, Wertpapiere, Pässe, Verpackungsschachteln und Verpackungspapier.

## Revendications

1. Elément anticontrefaçon (1), **caractérisé en ce qu'**il comprend :
un substrat (2) qui est au moins partiellement perméable à la lumière, comprenant une première surface (32) et une seconde surface (31) à l'opposé l'une de l'autre ; et
une image anticontrefaçon (22) formée sur la première surface (32) du substrat, l'image anticontrefaçon comprenant une pluralité de groupes de pixels d'imagerie (A, B, C), et les groupes de pixels d'imagerie étant agencés apériodiquement et/ou sans un axe de symétrie ; et
une couche d'échantillonnage-synthèse (21) avec des caractéristiques optiques formées sur la seconde surface (31) du substrat ;
dans lequel des images visuelles cibles correspondant aux groupes de pixels d'imagerie peuvent être présentées à travers une partie perméable à la lumière du substrat et la couche d'échantillonnage- synthèse ;
les groupes de pixels d'imagerie comprennent des microstructures (221) d'absorption de lumière contenant une ouverture, **caractérisé en ce que** les microstructures ont des caractéristiques d'absorption spectrale ;
la largeur d'ouverture des microstructures d'absorption de lumière est inférieure à 1 µm; le rapport de la profondeur d'ouverture sur la largeur d'ouverture des microstructures d'absorption de lumière est supérieur à 0,3.

2. Elément anticontrefaçon selon la revendication 1, **caractérisé en ce que** l'image anticontrefaçon ne peut pas être déterminée sur la base uniquement d'une partie de la pluralité de groupes de pixels d'imagerie et/ou des images visuelles cibles.

3. Elément anticontrefaçon selon la revendication 1, **caractérisé en ce qu'**il comprend en outre :
une couche réfléchissante formée sur une surface de la couche d'échantillonnage-synthèse,
dans lequel les images visuelles cibles correspondant aux groupes de pixels d'imagerie peuvent être présentées à travers la partie perméable à la lumière du substrat et la couche d'échantillonnage- synthèse par la réflexion de la couche réfléchissante.

4. Elément anticontrefaçon selon la revendication 1, **caractérisé en ce que**
la pluralité de groupes de pixels d'imagerie sont agencés sur l'image anticontrefaçon correspondant à une corrélation d'affichage d'image,
dans lequel une pluralité d'images visuelles cibles correspondant à la pluralité de groupes de pixels d'imagerie peuvent être présentées à travers la partie perméable à la lumière du substrat et la couche d'échantillonnage-synthèse depuis une pluralité d'angles différents, et la corrélation d'affichage d'image est applicable à la pluralité d'images visuelles cibles.

5. Elément anticontrefaçon selon la revendication 1, **caractérisé en ce que**
l'image anticontrefaçon comprend un réseau de pixels anticontrefaçon composé d'une pluralité de pixels, et la pluralité de groupes de pixels d'imagerie est un ensemble d'une pluralité de pixels spécifiques sélectionnés depuis le réseau de pixels anticontrefaçon.

6. Elément anticontrefaçon selon la revendication 4, **caractérisé en ce que**
la corrélation d'affichage d'image inclut une ou plusieurs parmi ce qui suit : corrélation de changement de translation, corrélation de changement stéréoscopique, corrélation de changement de déformation, corrélation de changement de mise à l'échelle, corrélation de changement de rotation, corrélation de changement de scintillement, corrélation de changement de commutation, corrélation de changement de basculement.

7. Elément anticontrefaçon selon la revendication 1, **caractérisé en ce que** la couche d'échantillonnage- synthèse avec des caractéristiques optiques comprend un ou plusieurs parmi ce qui suit : microlentilles sphériques, microlentilles cylindriques, micromiroirs sphériques et micromiroirs cylindriques.

8. Elément anticontrefaçon selon la revendication 1, **caractérisé en ce que** l'image anticontrefaçon comprend en outre une image codée.

9. Elément anticontrefaçon selon la revendication 1, **caractérisé en ce que** l'élément anticontrefaçon comprend en outre une couche fonctionnelle de couleur avec un motif fluorescent.

10. Elément anticontrefaçon selon la revendication 1, **caractérisé en ce que** le substrat comprend un ou plusieurs parmi ce qui suit : un film PET monocouche, un film PVC monocouche, un film composite transparent et un film diélectrique de couleur.

11. Elément anticontrefaçon selon la revendication 1, **caractérisé en ce que** divers types d'informations de couleur correspondant aux microstructures d'absorption de lumière peuvent être présentés à travers la partie perméable à la lumière du substrat et la couche d'échantillonnage-synthèse par la réflexion de la couche réfléchissante.

12. Elément anticontrefaçon selon la revendication 11, **caractérisé en ce que** les divers types d'informations de couleur sont dans une correspondance biunivoque avec des groupes de paramètres de configuration de développement de couleur de l'élément anticontrefaçon, et chaque groupe de paramètres de configuration de développement de couleur inclut une ou plusieurs parmi ce qui suit : la matière et la forme de la couche réfléchissante, la forme d'agencement des microstructures d'absorption de lumière, la profondeur de l'ouverture, et la largeur de l'ouverture.

13. Elément anticontrefaçon selon la revendication 11, **caractérisé en ce que** les divers types d'informations de couleur incluent au moins deux parmi ce qui suit : rouge, marron, noir et blanc.

14. Produit anticontrefaçon optique, **caractérisé en ce qu'**il comprend l'élément anticontrefaçon selon l'une quelconque des revendications 1 à 13.

15. Produit anticontrefaçon optique selon la revendication 14, **caractérisé en ce que** le produit anticontrefaçon optique inclut un ou plusieurs parmi ce qui suit : lignes de sécurité de fenêtrage, étiquettes, billets de banque, cartes de crédit, valeurs mobilières, passeports, boîtes d'emballage et papier d'emballage.
